# EUROPEAN PATENT APPLICATION

(11) **EP 3 865 996 A2**
(43) Date of publication of application: **18.08.2021**
(21) Application number: 21181791.1
(22) Date of filing: 25.06.2021
(51) Int. Cl.: G06F 3/16, G10L 25/78, G10L 25/21

(54) **METHOD AND APPARATUS FOR TESTING RESPONSE SPEED OF ON-BOARD EQUIPMENT, DEVICE AND STORAGE MEDIUM**

(30) Priority: 22.12.2020 CN 202011530702
(71) Applicant: Apollo Intelligent Connectivity (Beijing) Technology Co., Ltd., Beijing (CN)
(72) Inventor: LIU, Zhenzhen, Haidian District (CN); SONG, Shuqing, Haidian District (CN)
(74) Representative: Poskett, Oliver James

(57) **Abstract**

The present application provides a method and apparatus for testing response speed of an on-board device, a device and a storage medium, relating to the field of autonomous driving in the field of artificial intelligence and the field of Internet of Vehicles. The method for testing response speed of an on-board device includes: obtaining multimedia information which includes a preset voice command and response information of the on-board device to the preset voice command; analyzing the multimedia information and determining an end time of the preset voice command and a time corresponding to the response information; determining response speed of the on-board device according to the end time of the preset voice command and the time corresponding to the response information. This method improves the accuracy of the response speed test result.

## Description

### TECHNICAL FIELD

Embodiments of the present application relates to artificial intelligence technologies, and in particular, to a method and apparatus for testing response speed of an on-board device, a device and a storage medium, which can be used in the field of autonomous driving and the field of Internet of Vehicles.

### BACKGROUND

With the rise of the Internet of Vehicles and intelligent vehicles, intelligent on-board devices are becoming more and more popular, and users use various functions of vehicles directly through voice functions of on-board devices, which has gradually become a mainstream.

In this voice scenario, if the response speed of an on-board device to a voice command is too slow, poor voice function experience will be caused. Therefore, when performing an on-board device test, it is not only needed to perform a functional test, but also to perform a test for the response speed of the on-board device to the voice command, so as to perform iterative optimization of the voice function continuously.

When performing a response speed test, the response speed of the on-board device to a voice command is usually determined by means of log tracing point, but there is deviation between the time recorded by the log tracing point and actual response effect of the on-board device and the test result is not accurate.

### SUMMARY

The present application provides a method and apparatus, for testing response speed of an on-board device, a device and a storage medium for improving accuracy.

According to an aspect of the present application, a method for testing response speed of an on-board device is provided, which includes:
obtaining multimedia information, the multimedia information including a preset voice command and response information of the on-board device to the preset voice command;
analyzing the multimedia information and determining an end time of the preset voice command and a time corresponding to the response information;
determining the response speed of the on-board device according to the end time of the preset voice command and the time corresponding to the response information.

According to another aspect of the present application, an apparatus for testing response speed of an on-board device is provided, which includes:
an obtaining module, configured to obtain multimedia information, the multimedia information including a preset voice command and response information of the on-board device to the preset voice command;
an analyzing module, configured to analyze the multimedia information and determine an end time of the preset voice command and a time corresponding to the response information;
a determining module, configured to determine the response speed of the on-board device according to the end time of the preset voice command and the time corresponding to the response information.

According to still another aspect of the present application, an electronic device is provided, which includes:
at least one processor; and
a memory communicatively connected to the at least one processor; wherein,
the memory stores instructions executable by the at least one processor, and the instructions are executed by the at least one processor to enable the at least one processor to execute the above method for testing response speed of an on-board device.

According to yet another aspect of the present application, a non-transitory computer readable storage medium having computer instructions stored thereon is provided, where the computer instructions are used to enable a computer to execute the above method for testing response speed of an on-board device.

According to yet another aspect of the present application, a computer program product is provided, which includes a computer program, and when the computer program is executed by a processor, the above method for testing response speed of an on-board device is implemented.

According to the technical solution of the present application, the accuracy of the response speed test result of the on-board device is improved by analyzing the multimedia information including the preset voice command and the response information of the on-board device to the preset voice command.

It should be understood that the contents described in this part are not intended to identify key or important features of embodiments of the present application, nor are they used to limit the scope of the present application. Other features of the present application will be easily understood by the following description.

### BRIEF DESCRIPTION OF DRAWINGS

Drawings are for a better understanding of the present solution and do not constitute a limitation to the present application. Among them:
FIG. 1 is a schematic diagram of a voice function of an on-board device provided by an embodiment of the present application;
FIG. 2 is a schematic flow diagram of a method for testing response speed of an on-board device provided by an embodiment of the present application;
FIG. 3 is a schematic structural diagram of an apparatus for testing response speed of an on-board device provided by an embodiment of the present application;
FIG. 4 is a schematic block diagram of an electronic device for realizing the method for testing response speed of an on-board device according to the embodiment of the present application.

### DESCRIPTION OF EMBODIMENTS

The following describes illustrative embodiments of the present application in conjunction with the accompanying drawings, where various details of the embodiments of the present application are included to facilitate understanding, which should be considered as only illustrative. Therefore, those skilled in the art should recognize that various changes and modifications may be made to the embodiments described herein without departing from the scope of the present application. Similarly, for the clarity and conciseness, the description of well-known functions and structures is omitted in the following description.

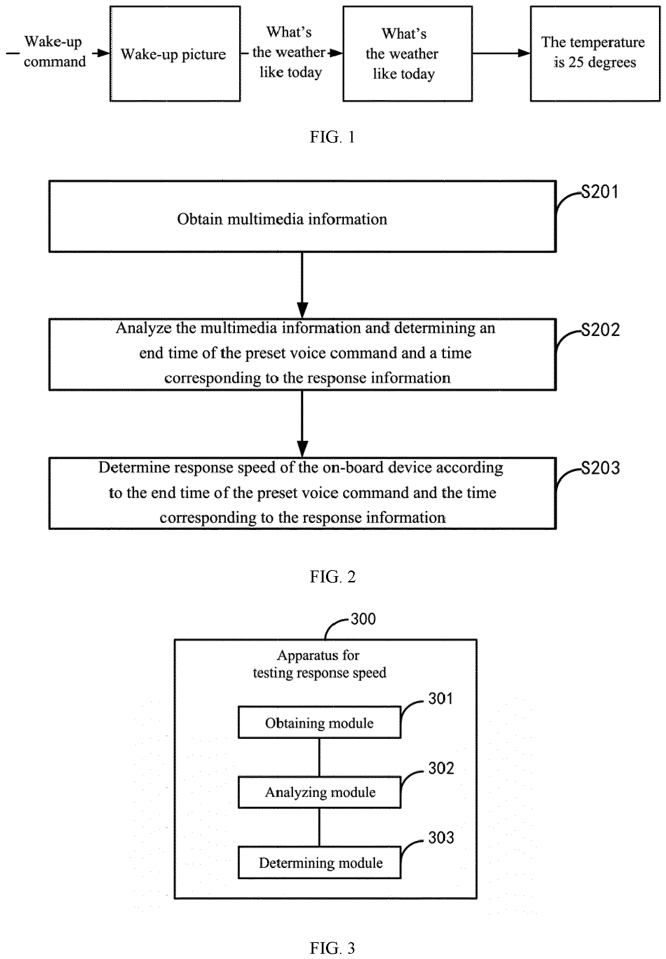

FIG. 1 is a schematic diagram of a voice function of an on-board device provided by an embodiment of the present application. As shown in FIG. 1, a user says a wake-up command, for example, "Xiao X, Xiao X", and a wake-up picture is displayed on an interface of the on-board device. At the same time, the on-board device may also voice broadcast a wake-up response. Then the user says a query command, for example, "What's the weather like today". The user's query command "What's the weather like today" is first displayed on the interface of the on-board device, then a query processing is performed, and a query result "The temperature is 25 degrees" is displayed on the interface. In addition, the on-board device may also voice broadcast the query result "The temperature is 25 degrees".

As shown in the above example, the on-board device can respond to the user's voice through interface displaying and/or voice broadcasting. When using the voice function, the user usually interacts with the on-board device one or more times. In each interaction stage, if the response speed of the interface displaying and/or voice broadcasting of the on-board device is too slow, poor user experience will be caused. Therefore, when testing the voice function of the on-board device, it is needed to test the response speed to facilitate continuous optimization of response.

In an example, when performing a voice response speed test, the response time of the on-board device to a voice command is usually recorded by means of log tracing point, but there is deviation between the time recorded by the log tracing point and the actual response effect of the on-board device and the test result is not accurate.

In another example, the user's voice and the response of the on-board device may be recorded by recording a video, and the response speed of the on-board device may be recorded by watching the video manually, but this manual recording method has low efficiency and poor accuracy.

In order to solve the above problems, the present application provides a method for testing response speed of an on-board device, which may be applied to the field of autonomous driving in the field of artificial intelligence and the field of Internet of Vehicles. The method records a voice command spoken by a user and a response made by an on-board device to obtain a corresponding video or audio, and analyzes the video or audio to extract a time corresponding to the speaking of the voice command by the user and the time at which the on-board device made the response, and then obtains a response speed test result of the on-board device accurately.

In the following, the method for testing response speed of an on-board device provided by the present application will be described in detail through specific embodiments. It is understandable that the following specific embodiments may be combined with each other, and the same or similar concepts or processes may not be repeated in some embodiments.

FIG. 2 is a schematic flow diagram of a method for testing response speed of an on-board device provided by an embodiment of the present application. As shown in FIG. 2, the method includes:
S201, obtain multimedia information.

The multimedia information includes a preset voice command, and response information of an on-board device to the preset voice command.

The preset voice command is a voice command that a user may say when using the voice function of the on-board device. The preset voice command may be one or more voice commands, and the response information includes a response to the one or more voice commands. Multimedia information is a video or audio which is obtained by recording the preset voice command and a corresponding response of the on-board device. For example, if there is only need for testing the voice response broadcast speed of the on-board device, then it is only needed to obtain the audio; if there is need for testing the interface display response speed of the on-board device, then it is needed to obtain the video.

During the test, the preset voice command may be spoken by a tester or played by an electronic device, and the on-board device will respond to the preset voice command accordingly. In the above test process, the preset voice command, the interface display response and/or the voice broadcast response of the on-board device may all be recorded. For example, the preset voice command and the voice broadcast response of the on-board device are recorded as an audio, or the preset voice command, and the interface display response and the voice broadcast response of the on-board device are recorded as a video.

S202, analyze the multimedia information and determining an end time of the preset voice command and a time corresponding to the response information.

The analysis of the multimedia information may include the analysis of the audio in the multimedia information and/or the video in the multimedia information. For example, by extracting the audio in the multimedia information, the time corresponding to the preset voice command and the time corresponding to the response information of the voice broadcast may be determined. For another example, by analyzing the video in the multimedia information, the time corresponding to the response information displayed through the interface of the on-board device may also be determined.

S203, determine response speed of the on-board device according to the end time of the preset voice command and the time corresponding to the response information.

After obtaining the end time of the preset voice command and the time corresponding to the corresponding response information, the response speed of the on-board device can be determined according to the difference between the time corresponding to the response information and the end time of the preset voice command. The smaller the difference between the time corresponding to the response information and the end time of the preset voice command, the faster the response speed of the on-board device, while the larger the difference between the time corresponding to the response information and the end time of the preset voice command, the slower the response speed of the on-board device.

In the method for testing response speed of an on-board device provided by the present embodiment, by recording the voice command spoken by the user and the response of the on-board device to obtain a corresponding video or audio, and analyzing the video or audio, the time corresponding to the voice command spoken by the user and the time when the on-board device responds can be accurately extracted, and then the response speed test result of the on-board device can be obtained, thereby ensuring the accuracy of the test result.

On the basis of the above embodiment, how to determine the end time of the preset voice command in S202 will be described, and on this basis, how to determine the response speed of the on-board device in S203 will be described accordingly.

An audio file is extracted from the multimedia information; a start time and an end time of at least one voice segment with an audio decibel value greater than or equal to a preset decibel value in the audio file are determined; the end time of the preset voice command is determined from the at least one voice segment according to the start time and the end time of the at least one segment.

First, it needs to be explained that, if there is only need for testing the voice response broadcast speed of the on-board device, then the obtained multimedia information can be an audio. In this case, there is no need to extract an audio file from the multimedia information, but directly process the multimedia information as an audio file.

The preset decibel value is a preset minimum silent decibel value. A moment when the audio decibel value of the audio file is less than the preset decibel value may be considered as a moment being in a silent state, that is, the moment when there is no preset voice command issued, and the on-board device also does not perform voice broadcasting. While the time period during which the audio decibel value of the audio file is greater than or equal to the preset decibel value may be considered as the time period during which the preset voice command is issued or the time period during which the on-board device performs voice broadcasting. By traversing the audio file, the voice segment is determined according to the decibel value, so that the accuracy of the time of the extracted voice command or response information is ensured.

Specifically, the audio file is traversed, and a first time is determined as the start time of a first voice segment once the audio decibel value of the audio file at the first time is greater than or equal to the preset decibel value, and a second time after the first time is determined as the end time of the first voice segment once the audio decibel value of the audio file at the second time is less than or equal to the preset decibel value and the audio decibel values within a preset time period after the second time are all less than or equal to the preset decibel value.

For example, the traversal starts from the start time of the audio file. If the audio decibel value at moment t1 is greater than or equal to the preset decibel value, moment t1 is recorded as the start time of a first voice segment, and the traversal continues. If the audio decibel value at moment t2 is less than or equal to the preset decibel value, and the audio decibel values within the preset time period after moment t2 are less than or equal to the preset decibel value, then moment t2 is recorded as the end time of the first voice segment. Then, the audio file continues to be traversed, the above process is repeated, and finally the start time and end time of at least one voice segment are obtained. Each voice segment corresponds to a time of issuing a preset voice command or a time of broadcasting a voice response by the on-board device. By traversing the audio file and comparing the decibel values of the start time and the end time, the accuracy of the time of the extracted voice command or response information is ensured.

Because commands which may be included in the preset voice command are known, if the response information of the on-board device includes voice information, then whether the on-board device has a voice response to each preset voice command is also known. Therefore, for the at least one voice segment obtained above, according to the sequence of the preset voice commands and the sequence of the voice responses of the on-board device, it can be determined which preset voice command each voice segment corresponds to, or a voice response corresponding to which preset voice command each voice segment corresponds to. Thereby, the start time and the end time of the preset voice command can be determined from the at least one voice segment according to the start time and the end time of each voice segment of the at least one segment. After determining the end time of the preset voice command, it is needed to determine the time corresponding to the response information of the on-board device, and then determine the response speed of the on-board device. Description will be given in the following by scenarios.

### First scenario

In a case that the response information of the on-board device includes voice information, that is, the on-board device responds to the preset voice command through voice broadcasting. In this case, the start time and the end time of the voice information of the on-board device for conducting the voice response may also be determined from the at least one voice segment according to the start time and end time of the at least one voice segment in the above embodiment. Thus, broadcast speed of a response voice of the on-board device for the preset voice command can be determined according to the end time of the preset voice command and the start time of the voice information.

Taking the voice command in FIG. 1 as an example, the end time of the preset voice command "What's the weather like today" and the start time of voice broadcasting the query result of the on-board device "The temperature is 25 degrees" are determined from the audio file by the above method. The broadcast speed of the response voice of the on-board device for the preset voice command "What's the weather like today" can be determined by subtracting the end time of the preset voice command "What's the weather like today" from the start time of voice broadcasting the query result of the on-board device "The temperature is 25 degrees".

In this scenario, the case that the response information is voice information is explained. By analyzing the audio file, the times corresponding to the preset voice command and responded voice information can be accurately obtained, thereby ensuring the accuracy of the broadcast speed test on the response voice of the on-board device.

In addition to voice information, the response information of the on-board device may also be picture information, or includes both voice information and picture information. Picture information means that the on-board device displays the response to the preset voice command on the interface. In the case that the response information includes picture information, the multimedia file obtained in the previous step shall be a video. In this scenario, in addition to determining the end time of the preset voice command according to the method of the above embodiment, it is needed to determine the time when the response information is displayed on the interface of the on-board device, that is, the time corresponding to the picture information, so as to determine the response speed. Specifically, the time corresponding to the picture information may be determined according to a similarity matching result and/or a character recognition result of multiple frames of pictures in the multimedia information, and the image similarity or character matching may be performed by image recognition and other ways, thereby improving the accuracy of the test result. The description is given in the following.

### Second scenario

The preset voice command includes a wake-up command, and the response information includes a wake-up response picture.

The wake-up command is used to wake-up the voice function of the on-board device. For example, the wake-up command is "Xiao X, Xiao X", and the wake-up response picture of the on-board device may be a preset wake-up picture displayed on the display interface. The multimedia information includes the display video of the display interface of the on-board device. Therefore, by matching multiple frames of pictures in the video, the wake-up response picture can be determined, and then the time corresponding to the wake-up response picture can be determined.

Similarity matching is performed between a first frame of picture of the multiple frames of pictures in the multimedia information and a preset wake-up picture. If the similarity is less than a preset value, the similarity matching continues to be performed between a next frame of picture and the wake-up picture until the similarity between a first picture and the wake-up picture is greater than or equal to the preset value, and then the time corresponding to the first picture is determined as the time corresponding to the wake-up response picture.

The similarity matching is performed from the first frame of picture one by one. The first picture is the first one whose similarity to the wake-up picture is greater than or equal to the preset value, and the time corresponding to the first picture is the time corresponding to the wake-up response picture.

Correspondingly, the wake-up speed of the on-board device can be determined according to the time corresponding to the wake-up response picture and the end time of the wake-up command. Specifically, the wake-up speed of the on-board device can be obtained by subtracting the end time of the wake-up command from the time corresponding to the wake-up response picture. The time corresponding to the wake-up response picture can be accurately obtained by frame-by-frame picture matching, thereby making the test result of the wake-up speed of the on-board device more accurate.

### Third scenario

The preset voice command includes a voice query command, and the response information includes a query command display picture.

For example, the voice query command is "What's the weather like today". After the on-board device obtains the voice query command, it first displays the query command on the interface, that is, it displays "What's the weather like today" in text. Here, the picture of the on-board device displaying the query command is referred to as the query command display picture.

Character recognition is performed on a second picture of the multiple frames of pictures in the multimedia information. If characters recognized from the second picture do not match characters corresponding to the voice query command, the character recognition continues to be performed on a next frame of picture of the second picture until characters recognized from a third picture match the characters corresponding to the voice query command, then the time corresponding to the third picture is determined as the time corresponding to the query command display picture.

First, the second picture mentioned above will be explained. In a situation, when testing, it is needed to test the wake-up process and the subsequent query process. The preset voice command includes a wake-up command and multiple voice query commands. The wake-up command is the command illustrated in the second scenario mentioned above. In this situation, the second picture is a picture after the first picture in the above example, that is, a picture after the wake-up response picture. In another situation, if there is no need to test the wake-up process but only to test the response to the voice query command, the multimedia information recorded in the previous step may not include the video of the wake-up process, but only include the video of the voice query command and the subsequent response. In this situation, the second picture may be the first frame of picture of the multiple frames of pictures in the multimedia information.

Starting from the second picture, the character recognition is performed frame by frame to determine whether the characters displayed in the picture match the characters corresponding to the voice query command. Taking the voice query command of "What's the weather like today" as an example, if the characters recognized from a third picture is "What's the weather like today", it means that the voice query command has been displayed in the third picture, so the time corresponding to the third picture is determined as the time corresponding to the query command display picture.

Correspondingly, the display speed of the on-board device for the characters corresponding to the voice query command is determined according to the time corresponding to the query command display picture and the end time corresponding to the voice query command. Specifically, the display speed of the on-board device for the characters corresponding to the voice query command, which may alternatively be referred to screen speed, may be obtained by subtracting the end time of the voice query command from the time corresponding to the query command display picture. The character display speed can be accurately obtained by frame-by-frame picture matching, thereby making the response speed test result of the on-board device more accurate.

### Fourth scenario

The preset voice command includes a voice query command, and the response information includes a query command display picture and a query result display picture.

Referring to the example of the third scenario mentioned above, the voice query command is "What's the weather like today". The response information of the on-board device includes the query command display picture, that is, "What's the weather like today" is displayed on the interface. And then the query result is displayed on the interface, for example, "The temperature is 25 degrees" is displayed on the interface.

Therefore, in addition to determining the character display speed according to the method of the third scenario mentioned above, it is also needed to determine the display speed of the query result after that. After determining the third picture, i.e., the query command display picture, according to the method of the third scenario, similarity matching is performed between a next frame of picture of the third picture and the third picture, if the similarity is greater than or equal to the preset value, the similarity continues to be calculated between a further next frame of picture and the third picture until the similarity between a fourth picture and the third picture is less than the preset value, then the fourth picture is set as a reference picture.

In this process, by determining the similarity comparison between the picture after the third picture and the third picture, the fourth picture with a great difference from the third picture is determined. The on-board device displaying the fourth picture indicates that the display interface of the on-board device has jumped, that is, the on-board device starts to jump from displaying the voice query instruction "What's the weather like today" to displaying the query result, but the fourth picture does not necessarily display the query result completely, and the interface may still change. Therefore, it is needed to further match and determine, and if the subsequent picture is no longer changed, it can be determined that the query result has been completely displayed.

Similarity matching is performed from a first frame of picture after the reference picture with the reference picture in turn, and once the similarity between a fifth picture after the reference picture and the reference picture is less than the preset value, the fifth picture is set as a new reference picture, and this step is repeated until the similarity between a preset number of pictures after the reference picture and the reference picture is greater than or equal to the preset value, then the time corresponding to the reference picture is determined as the time corresponding to the query result display picture.

When performing similarity matching between the picture after the reference picture and the reference picture, if the similarity is less than the preset value, it means that the display interface of the on-board device is still changing, that is, the response result has not been fully displayed, so a new reference picture is set and similarity matching continues to be performed based on the new basic picture. If the similarity between the picture after the reference picture and the reference picture is greater than or equal to the preset value, it means that the display interface of the on-board device may not be changed. At this time, it is needed to continue to perform similarity matching on multiple subsequent pictures. Specifically, when the similarity between a next frame of picture of the reference picture and the reference picture is greater than or equal to the preset value, an empty candidate array is set, and the serial number of the next frame of picture of the reference picture is added to the array. If the length of the candidate array has not reached a preset number, then the similarity matching continues to be performed between a further next picture and the reference picture. If the similarity is greater than or equal to the preset value, then this picture is added to the candidate data array and matching of a still further next picture is performed. If the similarity is less than the preset value, then the picture is set as a new reference picture, the candidate data is cleared, and the similarity matching continues to be performed based on the new reference picture again. According to the above matching process, until the length of candidate array reaches the preset number, which means that the similarity between the preset number of pictures after the reference picture and the reference picture is greater than or equal to the preset value, that is, the preset number of pictures after the reference picture no longer change, so it can be determined that the reference picture is the query result display picture that has completely displayed the query result.

Correspondingly, the display speed of the on-board device for a query result is determined according to the time corresponding to the query result display picture and the end time of the voice query command. Specifically, the display speed of the on-board device for the query result can be obtained by subtracting the end time of the voice query command from the time corresponding to the query result display picture. The time of the query result display picture that has completely displayed the query result can be accurately obtained by the method of frame-by-frame picture matching, thereby making the response speed test result of the on-board device more accurate.

FIG.3 is a structural diagram of an apparatus for testing response speed of an on-board device provided by an embodiment of the present application. As show in FIG.3, the apparatus 300 for testing response speed includes:
an obtaining module 301, configured to obtain multimedia information, the multimedia information including a preset voice command, and response information of an on-board device to the preset voice command;
an analyzing module 302, configured to analyze the multimedia information and determine an end time of the preset voice command and a time corresponding to the response information;
a determining module 303, configured to determine response speed of the on-board device according to the end time of the preset voice command and the time corresponding to the response information.

In a possible implementation, the analyzing module 302 includes:
an extracting unit, configured to extract an audio file from the multimedia information;
a first determining unit, configured to determine a start time and an end time of at least one voice segment with an audio decibel value greater than or equal to a preset decibel value in the audio file;
a second determining unit, configured to determine the end time of the preset voice command from the at least one voice segment according to the start time and the end time of the at least one segment.

In a possible implementation, the response information includes voice information; and the analyzing module 302 includes:
a third determining unit, configured to determine a start time of the voice information from the at least one voice segment according to the start time and the end time of the at least one segment;
the determining module 303 includes:
   a fourth determining unit, configured to determine broadcast speed of a response voice of the on-board device to the preset voice command according to the end time of the preset voice command and the start time of the voice information.

In a possible implementation, the first determining unit is configured to:
traverse the audio file, and determine a first time as a start time of a first voice segment once the audio decibel value of the audio file at the first time is greater than or equal to a preset decibel value, , and determine a second time after the first time as an end time of the first voice segment once the audio decibel value of the audio file at the second time is less than or equal to the preset decibel value and audio decibel values within a preset time period after the second time are all less than or equal to the preset decibel value.

In a possible implementation, the response information includes picture information; and the analyzing module 302 includes:
a fifth determining unit, configured to determine a time corresponding to the picture information according to a similarity matching result and/or a character recognition result of multiple frames of pictures in the multimedia information.

In a possible implementation, the preset voice command includes a wake-up command; the response information includes a wake-up response picture; and the fifth determining unit includes:
a first determining subunit, configured to perform similarity matching between a first frame of picture of the multiple frames of pictures in the multimedia information and a preset wake-up picture, and if the similarity is less than a preset value, continue to perform the similarity matching between a next frame of picture and the wake-up picture until the similarity between a first picture and the wake-up picture is greater than or equal to the preset value, then determine a time corresponding to the first picture as a time corresponding to the wake-up response picture;
the determining module 303 includes:
   a sixth determining unit, configured to determine wake-up speed of the on-board device according to the time corresponding to the wake-up response picture and an end time of the wake-up command.

In a possible implementation, the preset voice command includes a voice query command; and the response information includes a query command display picture;
the fifth determining unit includes:
   a second determining subunit, configured to perform character recognition on a second picture of the multiple frames of pictures in the multimedia information, and if characters recognized from the second picture do not match characters corresponding to the voice query command, continue to perform the character recognition on a next frame of picture of the second picture until characters recognized from a third picture match the characters corresponding to the voice query command, then determine a time corresponding to the third picture as a time corresponding to the query command display picture;
   the determining module 303 includes:
      a seventh determining unit, configured to determine display speed of the on-board device for the characters corresponding to the voice query command according to the time corresponding to the query command display picture and an end time of the voice query command.

In a possible implementation, the response information includes a query result display picture;
the fifth determining unit includes:
a third determining subunit, configured to perform similarity matching between a next frame of picture of the third picture and the third picture, and if the similarity is greater than or equal to the preset value, continue to calculate the similarity between a further next frame of picture and the third picture until the similarity between a fourth picture and the third picture is less than the preset value, then set the fourth picture as a reference picture;
a fourth determining subunit, configured to perform similarity matching from a first frame of picture after the reference picture with the reference picture in turn, and once the similarity between a fifth picture after the reference picture and the reference picture is less than the preset value, set the fifth picture as a new reference picture, and repeat this step until the similarity between a preset number of pictures after the reference picture and the reference picture is greater than or equal to the preset value, then determine a time corresponding to the reference picture as a time corresponding to the query result display picture;
the determining module 303 includes:
   an eighth determining unit, configured to determine display speed of the on-board device for a query result according to the time corresponding to the query result display picture and an end time of the voice query command.

The apparatus for testing response speed of an on-board device provided by the embodiment of the present application can be configured to implement the technical solution of the method for testing response speed of an on-board device in any of the embodiments above, and its implementation principle and technical effect are similar to the implementation principle and technical effect of the method for testing response speed of an on-board device and reference may be made to the implementation principle and technical effect of the method for testing response speed of an on-board device, which will not be repeated herein.

According to an embodiment of the present application, the present application also provides an electronic device and a readable storage medium.

According to an embodiment of the present application, the present application also provides a computer program product, the computer program product includes: a computer program, the computer program is stored in a readable storage medium, at least one processor of an electronic device can read the computer program from the readable storage medium, and the at least one processor executes the computer program to enable the electronic device to execute the solution provided by any of the above embodiments.

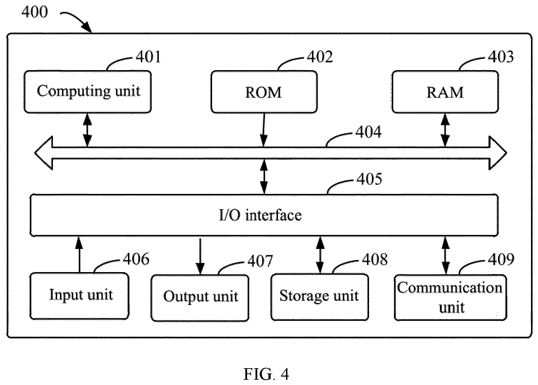

FIG.4 is a schematic block diagram of an electronic device for implementing the method for testing response speed of an on-board device according to the embodiment of the present application. The electronic device is intended to represent various forms of digital computers, such as a laptop computer, a desktop computer, a work station, a personal digital assistant, a server, a blade server, a main frame computer, and other suitable computers. The Electronic device may also represent various forms of mobile devices, such as a personal digital assistant, a cellular phone, a smart phone, a wearable device and other similar computing devices. The components shown herein, their connections and relationships, and their functions are only examples and are not intended to limit the implementation of the present disclosure described and/or required herein.

As shown in FIG. 4, the electronic device 400 includes a computing unit 401, which may perform various appropriate actions and processes based on a computer program stored in a read-only memory (ROM) 402 or a computer program loaded from a storage unit 408 into a random access memory (RAM) 403. In the RAM 403, various programs and data required for the operation of the device 400 can also be stored. The computing unit 401, the Rom 402 and the RAM 403 are connected to each other through a bus 404. An input/output (I/O) interface 405 is also connected to the bus 404.

Multiple components in the device 400 are connected to the I/O interface 405, including: an input unit 406, such as a keyboard, a mouse; an output unit 407, such as various types of displays, loudspeakers; a storage unit 408, such as a disk, an optical disk; and a communication unit 409, such as a network card, a modem, a wireless communication transceiver. The communication unit 409 enables the device 400 to exchange information/data with other devices through a computer network such as the Internet and/or various telecommunication networks.

The computing unit 401 may be various general-purpose and/or special-purpose processing components with processing and computing capabilities. Some examples of the computing unit 401 includes, but are not limited to, a central processing unit (CPU), a graphics processing unit (GPU), various dedicated artificial intelligence (AI) computing chips, various computing units running machine learning model algorithms, a digital signal processor (DSP), and any appropriate processor, controller, microcontroller, etc. The computing unit 401 performs the various methods and processes described above, for example the method for testing response speed of an on-board device. For example, in some embodiments, the method for testing response speed of an on-board device may be implemented as a computer software program, which is tangibly included in a machine-readable medium, such as the storage unit 408. In some embodiments, part or all of the computer program may be loaded and/or installed on the device 400 via the ROM 402 and/or the communication unit 409. When a computer program is loaded into the RAM 403 and executed by the computing unit 401, one or more steps of the method for testing response speed of an on-board device described above may be performed. Alternatively, in other embodiments, the computing unit 401 may be configured to perform the method for testing response speed of an on-board device in any other appropriate manner (for example, by means of firmware).

Various implementations of the systems and technologies described above may be implemented in a digital electronic circuit system, an integrated circuit system, a field programmable gate array (FPGA), an application specific integrated circuit (ASIC), an application specific standard product (ASSP), a system on chip system (SOC), a load programmable logic equipment (CPLD), computer hardware, firmware, software, and/or their combinations. These various embodiments may include: being implemented in one or more computer programs, the one or more computer programs may be executed and/or interpreted on a programmable system including at least one programmable processor, which may be a dedicated or general purpose programmable processor and may receive data and instructions from a storage system, at least one input device, and at least one output, and transmit data and instructions to the storage system, the at least one input device, and the at least one output device.

The program code for implementing the method of the present disclosure may be written in any combination of one or more programming languages. The program code may be provided to the processor or controller of a general-purpose computer, a special-purpose computer, or other programmable data processing device, so that when the program code is executed by the processor or controller, the functions specified in the flowcharts and/or block diagrams are implemented. The program code may be executed completely on a machine, partially on a machine, partially on a machine and partially on a remote machine as separate packages, or completely on a remote machine or server.

In the context of the present disclosure, the machine-readable medium may be a tangible medium, which may include or store programs for use by an instruction execution system, apparatus, or device or in combination with the instruction execution system, apparatus, or device. The machine-readable medium may be a machine-readable signal medium or a machine-readable storage medium. The machine-readable medium may include, but not be limited to, an electronic, magnetic, optical, electromagnetic, infrared, or semiconductor system, apparatus, or device, or any suitable combination of the above. More specific examples of the machine-readable storage medium will include electrical connection based on one or more wires, a portable computer disk, a hard disk, a random-access memory (RAM), a read-only memory (ROM), an erasable programmable read-only memory (EPROM or flash memory), optical fiber, a convenient compact disk read-only memory (CD-ROM), an optical storage device, a magnetic storage device, or any suitable combination of the above.

In order to provide interaction with a user, the systems and technologies described herein may be implemented on a computer which has: a display device for displaying information to the user (for example, a CRT (cathode ray tube) or an LCD (liquid crystal display) monitor; and a keyboard and a pointing device (for example, a mouse or a trackball), through which the user can provide input to the computer. Other types of devices may also be used to provide interaction with the user; for example, feedback provided to the user may be any form of sensing feedback (for example, visual feedback, auditory feedback, or tactile feedback); and input from the user may be received in any form (including sound input, voice input or tactile input).

The systems and technologies described herein may be implemented in a computing system including a background component (for example, as a data server), or a computing system including a middleware component (for example, an application server), or a computing system including a front-end component (for example, a user computer with a graphical user interface or a web browser through which the user can interact with the implementation of the system and technology described herein), or any combination of such back-end component, middleware component, or front-end component. The components of the system may be connected to each other through digital data communication in any form or medium (for example, a communication network). Examples of communication networks include: local area network (LAN), wide area network (WAN), and the Internet.

The computer system may include a client and a server. The client and server are generally far away from each other and usually interact through a communication network. The relationship between the client and the server is generated by computer programs that run on corresponding computers and have a client-server relationship with each other. The server may be a cloud server, also known as a cloud computing server or cloud host, which is a host product in a cloud computing service system, to solve the defects of traditional physical host and VPS service (Virtual Private Server, VPS) with large management difficulty and weak business expansion. The server may also be a server of a distributed system or a server combined with a block chain.

It should be understood that the steps may be reordered, added, or deleted using the various forms of processes shown above. For example, the steps recorded in this application may be performed in parallel, sequentially, or in a different order, as long as the desired result of the technical solution disclosed in this application can be realized, which is not limited herein.

The above specific implementation does not constitute a limitation on the scope of protection of this application. It should be understood by those skilled in the art that various modifications, combinations, sub combinations and substitutions may be made according to design requirements and other factors. Any modification, equivalent replacement and improvement made within the principle of this application shall be included in the protection scope of this application.

## Claims

1. A method for testing response speed of an on-board device, comprising:
obtaining (S201) multimedia information, the multimedia information comprising a preset voice command and response information of the on-board device to the preset voice command;
analyzing (S202) the multimedia information and determining an end time of the preset voice command and a time corresponding to the response information;
determining (S203) the response speed of the on-board device according to the end time of the preset voice command and the time corresponding to the response information.

2. The method according to claim 1, wherein the analyzing the multimedia information and determining an end time of the preset voice command, comprises:
extracting an audio file from the multimedia information;
determining a start time and an end time of at least one voice segment with an audio decibel value greater than or equal to a preset decibel value in the audio file;
determining the end time of the preset voice command from the at least one voice segment according to the start time and the end time of the at least one segment.

3. The method according to claim 2, wherein the response information comprises voice information; the determining a time corresponding to the response information, comprises:
determining a start time of the voice information from the at least one voice segment according to the start time and the end time of the at least one segment;
the determining the response speed of the on-board device according to the end time of the preset voice command and the time corresponding to the response information, comprises:
determining broadcast speed of a response voice of the on-board device for the preset voice command according to the end time of the preset voice command and the start time of the voice information.

4. The method according to claim 2, wherein determining a start time and an end time of at least one voice segment with an audio decibel value greater than or equal to a preset decibel value in the audio file, comprises:
traversing the audio file, determine a first time as a start time of a first voice segment once the audio decibel value of the audio file at the first time is greater than or equal to a preset decibel value, and determine a second time after the first time as an end time of the first voice segment once the audio decibel value of the audio file at the second time is less than or equal to the preset decibel value and audio decibel values within a preset time period after the second time are all less than or equal to the preset decibel value.

5. The method according to any one of claims 1, wherein the response information comprises picture information; the determining a time corresponding to the response information, comprises:
determining a time corresponding to the picture information according to a similarity matching result and/or a character recognition result of multiple frames of pictures in the multimedia information.

6. The method according to claim 5, wherein the preset voice command comprises a wake-up command; and the response information comprises a wake-up response picture;
the determining a time corresponding to the picture information according to a similarity matching result and/or a character recognition result of multiple frames of pictures in the multimedia information, comprises:
performing similarity matching between a first frame of picture of the multiple frames of pictures in the multimedia information and a preset wake-up picture, and if similarity is less than a preset value, continuing to perform the similarity matching between a next frame of picture and the wake-up picture until similarity between a first picture and the wake-up picture is greater than or equal to the preset value, then determining a time corresponding to the first picture as a time corresponding to the wake-up response picture;
the determining response speed of the on-board device according to the end time of the preset voice command and the time corresponding to the response information, comprises:
determining wake-up speed of the on-board device according to the time corresponding to the wake-up response picture and an end time of the wake-up command.

7. The method according to claim 5, wherein the preset voice command comprises a voice query command; and the response information comprises a query command display picture;
the determining a time corresponding to the picture information according to a similarity matching result and/or a character recognition result of multiple frames of pictures in the multimedia information, comprises:
performing character recognition on a second picture of the multiple frames of pictures in the multimedia information, and if characters recognized from the second picture do not match characters corresponding to the voice query command, continuing to perform the character recognition on a next frame of picture of the second picture until characters recognized from a third picture match the characters corresponding to the voice query command, then determining a time corresponding to the third picture as a time corresponding to the query command display picture;
the determining response speed of the on-board device according to the end time of the preset voice command and the time corresponding to the response information, comprises:
determining display speed of the on-board device for the characters corresponding to the voice query command according to the time corresponding to the query command display picture and an end time corresponding to the voice query command.

8. The method according to claim 7, wherein the response information comprises a query result display picture;
the determining the time corresponding to the picture information according to a similarity matching result and/or a character recognition result of multiple frames of pictures in the multimedia information, comprises:
performing similarity matching between a next frame of picture of the third picture and the third picture, and if similarity is greater than or equal to the preset value, continuing to calculate similarity between a further next frame of picture and the third picture until similarity between a fourth picture and the third picture is less than the preset value, then setting the fourth picture as a reference picture;
performing similarity matching from a first frame of picture after the reference picture with the reference picture in turn, and once similarity between a fifth picture after the reference picture and the reference picture is less than the preset value, setting the fifth picture as a new reference picture, and repeating this step until similarity between a preset number of pictures after the reference picture and the reference picture is greater than or equal to the preset value, then determining a time corresponding to the reference picture as a time corresponding to the query result display picture;
the determining response speed of the on-board device according to the end time of the preset voice command and the time corresponding to the response information, comprises:
determining display speed of the on-board device for a query result, according to the time corresponding to the query result display picture and the end time of the voice query command.

9. An apparatus for testing response speed (300) of an on-board device, comprising:
an obtaining module (301), configured to obtain multimedia information, the multimedia information comprising a preset voice command and response information of the on-board device to the preset voice command;
an analyzing module (302), configured to analyze the multimedia information and determine an end time of the preset voice command and a time corresponding to the response information;
a determining module (303), configured to determine the response speed of the on-board device according to the end time of the preset voice command and the time corresponding to the response information.

10. The apparatus according to claim 9, wherein the analyzing module (302) comprises:
an extracting unit, configured to extract an audio file from the multimedia information;
a first determining unit, configured to determine a start time and an end time of at least one voice segment with an audio decibel value greater than or equal to a preset decibel value in the audio file;
a second determining unit, configured to determine the end time of the preset voice command from the at least one voice segment according to the start time and end time of the at least one segment.

11. The apparatus according to claim 10, wherein the response information comprises voice information; and the analyzing module (302) comprises:
a third determining unit, configured to determine a start time of the voice information from the at least one voice segment according to the start time and the end time of the at least one segment;
the determining module (303) comprises:
a fourth determining unit, configured to determine broadcast speed of a response voice of the on-board device for the preset voice command according to the end time of the preset voice command and the start time of the voice information.

12. The apparatus according to any one of claims 9, wherein the response information comprises picture information; and the analyzing module (302) comprises:
a fifth determining unit, configured to determine a time corresponding to the picture information according to a similarity matching result and/or a character recognition result of multiple frames of pictures in the multimedia information.

13. The apparatus according to claim 12, wherein
the preset voice command comprises a wake-up command; the response information comprises a wake-up response picture; and the fifth determining unit comprises:
a first determining subunit, configured to perform similarity matching between a first frame of picture of the multiple frames of pictures in the multimedia information and a preset wake-up picture, and if similarity is less than a preset value, continue to perform the similarity matching between a next frame of picture and the wake-up picture until similarity between a first picture and the wake-up picture is greater than or equal to the preset value, then determine a time corresponding to the first picture as a time corresponding to the wake-up response picture;
the determining module (303) comprises:
a sixth determining unit, configured to determine wake-up speed of the on-board device according to the time corresponding to the wake-up response picture and an end time of the wake-up command;
or,
the preset voice command comprises a voice query command; and the response information comprises a query command display picture;
the fifth determining unit comprises:
a second determining subunit, configured to perform character recognition on a second picture of the multiple frames of pictures in the multimedia information, and if characters recognized from the second picture do not match characters corresponding to the voice query command, continue to perform the character recognition on a next frame of picture of the second picture until characters recognized from a third picture match the characters corresponding to the voice query command, then determine a time corresponding to the third picture as a time corresponding to the query command display picture;
the determining module (303) comprises:
a seventh determining unit, configured to determine display speed of the on-board device for the characters corresponding to the voice query command according to the time corresponding to the query instruction display picture and an end time of the voice query command;
or,
the response information comprises a query result display picture;
the fifth determining unit comprises:
a third determining subunit, configured to perform similarity matching between a next frame of picture of the third picture and the third picture, and if similarity is greater than or equal to the preset value, continue to calculate similarity between a further next frame of picture and the third picture until similarity between a fourth picture and the third picture is less than the preset value, then set the fourth picture as a reference picture;
a fourth determining subunit, configured to perform similarity matching from a first frame of picture after the reference picture with the reference picture in turn, and once similarity between a fifth picture after the reference picture and the reference picture is less than the preset value, set the fifth picture as a new reference picture, and repeat this step until similarity between a preset number of pictures after the reference picture and the reference picture is greater than or equal to the preset value, then determine a time corresponding to the reference picture as a time corresponding to the query result display picture;
the determining module (303) comprises:
an eighth determining unit, configured to determine display speed of the on-board device for a query result according to the time corresponding to the query result display picture and the end time of the voice query command.

14. A non-transitory computer readable storage medium having computer instructions stored thereon, wherein the computer instructions are used to enable a computer to execute the method according to any one of claims 1-8.

15. A computer program product, comprising a computer program, which implements the method according to any one of claims 1-8 when executed by a processor.
